# EUROPEAN PATENT APPLICATION

(11) **EP 1 437 696 A1**
(43) Date of publication of application: **14.07.2004**
(21) Application number: 04000363.4
(22) Date of filing: 09.01.2004
(51) Int. Cl.: G07F 17/16, G07F 7/00, G07F 19/00

(54) **System and method for content vending**

(30) Priority: 10.01.2003 US 339799
(71) Applicant: Nokia Corporation, 02150 Espoo (FI)
(72) Inventor: Vesikivi, Petri, 02660 Espoo (FI); Nihtilä, Jukka, 02130 Espoo (FI); Kotola, Sakari, 02700 Kaumainen (FI)
(74) Representative: Becker Kurig Straus

(57) **Abstract**

Systems and methods whereby content may be requested from a vending machine and delivered by that vending machine to a node such as a wireless terminal. Offered content may include, for instance, audio, video, ring tones, logos, software, images, and/or the like. Such a vending machine might be dedicated to vending content or might offer additional vending functionality, perhaps additionally acting as an automatic teller machine (ATM), ticket vending machine, drink vending machine, food vending machine, and/or the like

Delivery of content by such a vending machine to a node may, for instance, be performed using wireless networking equipment integrated into the vending machine.

## Description

### Field of Invention

This invention relates to systems and methods for content distribution.

### Background Information

In recent years, there has been an increase in the use of content usable, for instance, by wireless terminals and/or other computers. Such content includes, for example, audio, video, ring tones, logos, software (e.g., games and/or Java midlets), and images. Recently, record companies have begun distributing music via the Internet that might have otherwise only been available for purchase via compact disk or the like, while movie production companies, movie distribution companies, and the like have recently begun distributing films via the Internet that might have otherwise only been available for purchase via DVD (Digital Versatile Disk), video tape, or the like. Further, video game and other software companies have been enjoying increased sales.

In light of this, there may be interest in technologies that facilitate the distribution of such content.

### Summary of the Invention

According to various embodiments of the present invention, there are provided systems and methods whereby content may be requested from a vending machine and delivered by that vending machine to a node such as a wireless terminal. Offered content may include, for instance, audio, video, ring tones, logos, software, images, and/or the like. Such a vending machine might be dedicated to vending electronic content or might offer additional vending functionality, perhaps additionally acting as an automatic teller machine (ATM), ticket vending machine, drink vending machine, food vending machine, and/or the like

Delivery of content by such a vending machine to a node may be performed in a number of ways. For instance, delivery may be performed using wireless networking equipment integrated into the vending machine.

### Brief Description of the Drawings

Fig. 1 shows various exemplary software modules and other elements employable in embodiments of the present invention.
Fig. 2 is a flow chart showing exemplary steps involved in content selection according to embodiments of the present invention.
Fig. 3 is a flow chart showing exemplary steps involved in charging for content according to embodiments of the present invention.
Fig. 4 is a flow chart showing exemplary steps involved in content delivery according to embodiments of the present invention.
Fig. 5 shows an exemplary general purpose computer employable in embodiments of the present invention.
Fig. 6 shows a functional block diagram of an exemplary terminal employable in embodiments of the present invention.

### Detailed Description of the Invention

### General Operation

According to various embodiments of the present invention, there are provided systems and methods wherein content may be requested from a content vending machine (CVM) and delivered by that CVM to a node such as, for instance, a wireless terminal. Such a CVM might be dedicated to vending content. Alternately, the CVM might offer additional vending functionality. For instance, such a CVM might additionally act as an automatic teller machine (ATM), ticket vending machine, drink vending machine, and/or food vending machine.

Accordingly, an existing vending machine (e.g., a drink vending machine) might be augmented in accordance with embodiments of the present invention to additionally vend content. Alternately, a new vending machine might be created that vends content and offers additional vending functionality (e.g., ATM or drink vending functionality). Offered content may include, for instance, audio, video, ring tones, logos, software (e.g., games and/or Java midlets), images, and/or the like.

In certain embodiments of the present invention a user may request content from a CVM via, for example, a graphical user interface (GUI), voice interface, other interface, buttons, and/or the like associated with the CVM. Thus, as a specific example, a user might request content via a GUI operating in conjunction with a touch screen integrated with a CVM. It is further noted that, in certain embodiments of the present invention, a user may request content from a CVM via an interface or the like associated with a node. The node might be, for example, the user's wireless terminal.

As will be discussed in greater detail below, various embodiments of the present invention may provide for collection of payment for requested content. As will also be discussed in greater detail below, various embodiments of the present invention may provide for content delivery.

Delivery of content by a CVM to a node may be performed in a number of ways. For instance, delivery may be performed via wireless networking equipment integrated into and/or directly associated with the CVM. Such wireless networking equipment may provide a data link such as a Bluetooth link, IEEE 802.1 la link, IEEE 802.11b link, IEEE 801.11g link, Universal Mobile Telecommunications System (UMTS) link, terrestrial digital video broadcast (DVB-T) link, and/or the like.

For various embodiments of the present invention, where delivery is via a wireless link, the link may be short-range. For example, low transmission power and/or a directional antenna might be employed. Such might offer benefits such as reduced likelihood of dispatched content being received by a node other than the intended recipient node. This may also provide to the user of the CVM a better feeling of security when she can be certain that the content will certainly be delivered directly to that certain node associated with her. It is further noted that authentication and/or encryption may be employed in content delivery.

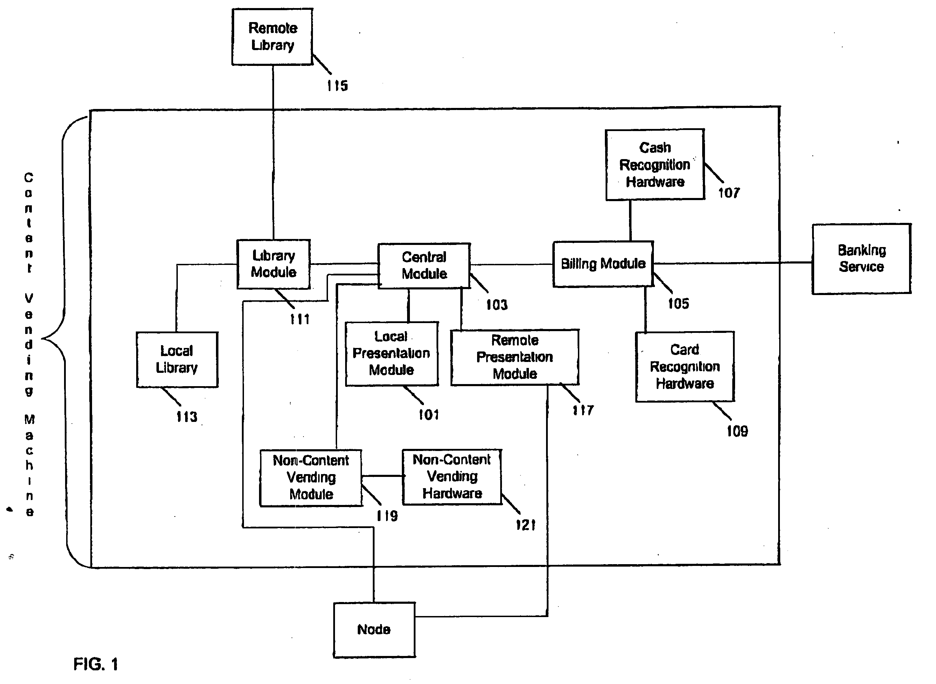

Shown in Fig. 1 are exemplary software modules and other elements employable in embodiments of the present invention.

Various aspects of the present invention will now be discussed in greater detail.

### Content Selection

As alluded to above, in various embodiments of the present invention a user may request content from a CVM via an interface, buttons, and/or the like associated with the CVM. With reference to Fig. 1 it is noted that, for various embodiments of the present invention, a local presentation module (LPM) 101 may be involved in the provision of such interface, buttons, and/or the like.

More specifically, a user wishing to request content via a CVM might first press a start button. Such a start button might, for example, be a GUI button associated with a GUI provided by the CVM, or be a physical button located on the CVM. LPM 101 may operate to recognize the button press and inform central module (CM) 103 that the press has taken place. Alternately, a user wishing to request content might first insert into the CVM cash, a credit card, a cash card, or the like. For various embodiments of the present invention, such action might be recognized by a billing module (BM) 105 operating of the CVM. Upon recognition, the BM may inform CM 103 of the occurrence.

BM 105 might, for instance, interface with cash recognition hardware 107 and/or card recognition hardware 109. Cash recognition hardware 107 might, for example, comprise coin and/or bill recognition hardware. Card recognition hardware 109 might, for example, comprise magnetic strip reader and/or smartcard interface hardware. For various embodiments of the present invention, BM 105 may interact with one or more driver software modules in interfacing with cash recognition hardware 107 and/or card recognition hardware 109. Various aspects of charging for content will be discussed in greater detail below.

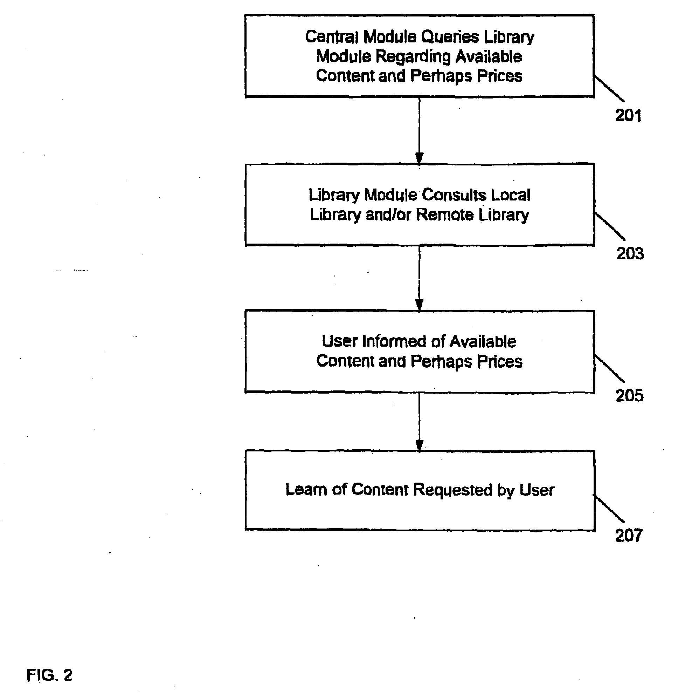

With reference to Fig. 2 it is noted that upon learning that the user has pressed a start button or the like, or has inserted cash, a card, or the like, CM 103 may interact with library module (LM) 111 in order to determine what content is available for delivery to nodes (e.g., the user's wireless terminal), and perhaps prices associated with the available content (step 201). In response, LM 111 might consult local library 113 and/or remote library 115 (step 203). LM 111 may learn from the consultation available content, and perhaps prices associated with that content. LM 111 may in turn pass this information to CM 103.

Each of local library 113 and remote library 115 may be a store containing various content items, and perhaps indications prices associated with those content items. Local library 113 may comprise a store collocated with the CVM, while remote library 115 may be located separately from the CVM. In various embodiments, a single remote library 115 may serve a plurality of CVMs. Communication between LM 111 and remote library 115 may, for instance, involve Simple Object Access Protocol (SOAP), Remote Method Invocation (RMI), and/or Java Messaging Service (JMS). Communication might occur via, for instance, the Internet, a general packet radio service (GPRS) network a UMTS network, and/or the like including also broadcasting networks, such as, for example, Digital Video Broadcasting (DVB) networks.

Upon receiving from LM 111 indication of available content, and perhaps prices associated with that content, CM 103 may instruct LPM 101 to inform the user of the available content, and perhaps the prices associated therewith (step 205). LPM 101 might, for instance, use a GUI to present this information to the user and to receive from the user indication of desired content. Accordingly, the user might interact with the GUI, as a specific example, via a touch screen integrated into the CVM. As another specific example, a screen and buttons, a keypad, and/or a keypad may be used to offer the GUI.

In certain embodiments, speech synthesis and/or speech recognition may be employed. Accordingly, the local presentation module 101, perhaps via interaction with speech synthesis software modules and/or hardware, might indicate to the user, via speech, available content and perhaps prices associated therewith. Alternately or additionally, a user might use speech to indicate desired content, with the speech being recognized by the local presentation module, perhaps via interaction with speech recognition software modules and/or hardware.

Upon learning of the requested content, the local presentation module could pass an indication of the requested content to CM 103 (step 207). As was alluded to above, and as will be discussed in greater detail below, CM 103 and/or various modules may act to have the requested content delivered to, for example, the user's wireless terminal or other node. Further, as was alluded to above, and as will also be discussed in greater detail below, various modules may act to collect payment for the requested content.

As alluded to above, in various embodiments of the present invention a user may request content from a CVM via a node. Such a node might be, for example, the user's wireless terminal. In certain of such embodiments, a user wishing to receive content from a CVM might press a start button or the like on the CVM. Such a button might, for example, be a physical button or a button provided by a GUI. CM 101 might recognize this button press, perhaps with the help of one or more software modules.

For embodiments where a wireless link is to be employed in communications between the CVM and the user's node, CM 101 might interact with wireless networking hardware associated with the CVM to search for nodes within transmission range of the CVM. Such searching might, for example, employ a discovery operation known in the art such as Bluetooth device discovery or the like. In certain embodiments, the CVM might act to present to the user a listing of the discovered nodes and request that the user select her node from the list. Performance of such operation might involve using local presentation module 101 and perhaps a GUI and/or voice interface.

In further of such embodiments, a user that will employ a node to select content might not need to press a start button or the like. Instead, the CVM might actively search for nodes in a manner analogous to that described above. Upon finding a node, the CVM might dispatch an invitation to that node to interact with the CVM. Such an invitation might, for example, be dispatched using object exchange (OBEX) object push profile, multimedia messaging, email, or the like. The user of a node receiving such an invitation could act to answer yes or no to the invitation, perhaps via a GUI associated with the receiving node. The response to the invitation might be sent to the CVM, for instance, using OBEX object push profile, multimedia messaging, email, or the like.

In still further of such embodiments where a user employs a node to select content, the user might use her node to discover the CVM. For instance, the user might employ her node to search for accessible CVMs. Such searching might employ Bluemoth device discovery or the like. Upon discovering accessible CVMs, the node might employ a GUI or the like to present the discovered CVMs to the user. In response, the user might employ the GUI or the like to select the CVM she wished to interact with. Such a CVM might be one that the user is standing in front of. In response to the selection, the node might dispatch a connection request to the selected CVM.

Upon the CVM receiving a user's selection from a presented list of discovered nodes, an affirmative response to an invitation, or a connection request from the user's node, the CVM may take action so that the user may select content provided by the CVM via her node. For instance, the CVM may dispatch to the node one or more software modules employable in displaying available content to the user and learning of the content desired by the user. Such modules might be dispatched to the node by the CVM via OBEX object push profile or the like.

Once received and put into operation by the node, a remote presentation module 117 operating on the CVM could communicate with the one or more modules operating on the node. Such communication could, for example, employ SOAP. The remote presentation module 117 and the one or more modules operating on the node could act in a manner analogous to that discussed above with reference to local presentation module 101 informing a user of available content and receiving from the user selection of desired content. It is noted that in certain embodiments, where the node already has the one or more software modules, the CVM might skip the step of dispatching the one or more modules to the node. The CVM might know if the node already had the one or more modules, for example, by having remote presentation module 117 attempt to communicate with the one or more modules and determining whether or not the attempt was successful.

In certain embodiments a CVM might not employ one or more modules operating of the node of the sort just described. Instead, the CVM might allow the user to learn of available content and to select desired content via a web browser interface or the like. In such embodiments, the CVM might dispatch to the user a web address or the like. Such a dispatch might be performed, for example, using OBEX object push protocol or the like. In response, a web browser associated with the node could be directed to the received web address or the like.

In certain embodiments this might happen automatically, perhaps after receiving permission from the node's user. Such permission might be sought and received, for example, via a GUI operating on the node. Alternately, the user of the node might view the web address or the like and manually direct the web browser to the web address or me like, perhaps by executing a viewed hyperlink. Once the web browser was directed to the appropriate address, remote presentation module 117 and the web browser could act in a manner analogous to that discussed above with reference to local presentation module 101 informing a user of available content and receiving form the user selection of desired content.

### Charging for Content and Content Delivery

For various embodiments of the present invention a CVM may collect payment from a user prior to content selection. For certain of such embodiments, the CVM might indicate on an integrated display, placard, and/or the like, how much cash should be inserted and/or how much will be charged to an inserted credit card or cash card. For example, in the case where all available content is the same price, all content is of at least a certain price, a deposit price has been established, or the like, the display, placard, and/or the like might indicate the amount.

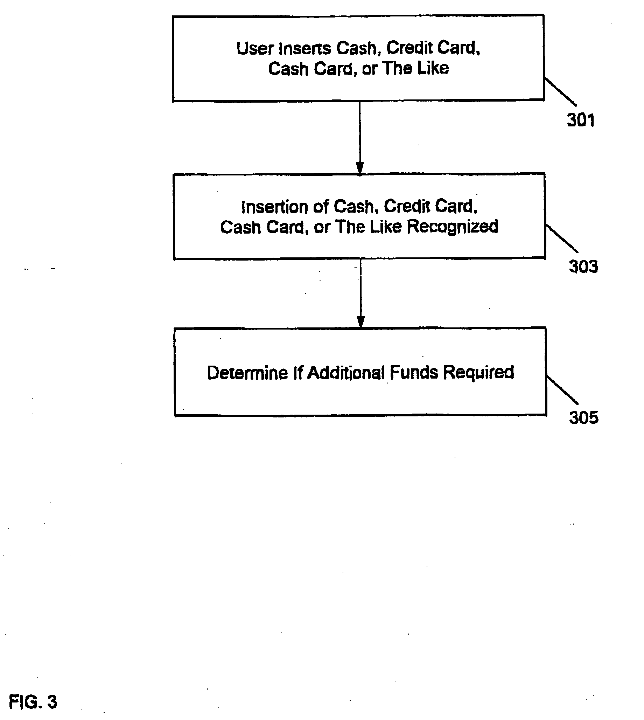

Turing to Fig. 3 it is noted that the user might, accordingly, insert cash, a credit card, a cash card, or the like into the CVM (step 301). With reference to Fig. 1 it is noted that, in such embodiments, billing module 105 might, perhaps via communication with cash recognition hardware 107, recognize insertion of cash into the CVM. Similarly, billing module might, perhaps via communication with card recognition hardware 109, recogmze insertion of a credit card, cash card, and/or the like (step 303).

Before inserting, for example, cash, the user might employ her node to indicate to the CVM that she was about to insert payment for the delivery of content to her node. The user could, for example, utilize a menu option provided by a GUI of her node to specify that such an indication should be dispatched. The dispatched indication might, in turn, be dispatched to the CVM by the node using, for instance, OBEX object push profile and/or Multimedia Messaging Service (MMS). Dispatched along with the indication could be one or more identifiers associated with the node. Such an identifier might be, for example, a phone number, Bluetooth address, or MAC address associated with the node.

Upon insertion of cash, billing module 105 might interact with cash recognition hardware 107 to determine that the proper amount of cash had been inserted. In the case where more cash needed to be inserted to meet a price that had been indicated by the CVM, the CVM might inform the user of the additional amount of cash that needed to be inserted. Such an indication might be indicated to the user by action of local presentation module 101, perhaps via a GUI, voice, and/or the like associated with the CVM. In certain embodiments, the user might be able to employ a credit card, a cash card, and/or the like in lieu of additional cash in order to provide additional funds necessary to meet a price that had been indicated by the CVM.

Upon insertion of a cash card, credit card, or the like into the CVM, billing module 105 may interface with card recognition hardware 109 in order to gain from the card appropriate information, such as credit card number or the like. In the case where the card is a cash card, the CVM might act to retrieve a PIN (personal identification number) or the like from the user. Such might be retrieved by action of local presentation module 101, perhaps via a GUI or the like associated with the CVM. Upon receiving any necessary PIN or the like from the user, billing module 105 might interact with a banking service to execute a charge for the appropriate amount to the appropriate cash card account, credit card account, and/or the like. The link to the banking service might be over a public network as such as the Internet, perhaps using encrypted communications and/or a virtual private network (VPN) tunnel. Alternately, the link might be over a secured, dedicated connection.

Upon receiving a response from the banking service that the charge had been made, billing module 105 could consider the funds to have been collected. In the case where the banking service indicated that the charge had not been made (e.g., the account had insufficient funds and/or credit to cover the charge), the user could be informed of this fact and perhaps be offered the opportunity to pay another way, such as using cash and/or a different cash card or credit card. Such informing might be preformed using local presentation module 101, perhaps via a GUI, voice interface, and/or the like associated with the CVM.

As alluded to above, funds collection before content selection might, for instance, be performed where there is an established deposit price, or where all content is of at least a minimum price but the price is not the same for all content. In such embodiments, after content selection, billing module 105 might act to determine if additional funds need to be collected (step 305). Where additional funds need to be collected, the user could be informed of this fact in a manner analogous to that discussed above. The user could insert cash, or a cash card, credit card, and/or the like, and the CVM could respond in a manner analogous to that discussed above with reference to collection of payment.

In certain embodiments, upon being informed that additional funds needed to be collected, the user could indicate that she did not wish to proceed. In such as case, the CVM could act to refund any monies already charged. Accordingly, billing module 105 could interact with cash recognition hardware 107 in order to instruct the hardware to refund collected cash. Similarly, billing module 105 could interact with the banking service to refund monies charged to a credit or cash card account. Similar refunding might take place in the case where it was determined that the user was unable to pay the additional funds required. Such a determination might be made, for example, where the banking service indicated that the additional funds could not be collected.

For various embodiments, funds might not be collected until after content selection. In such embodiments, the CVM might employ local presentation module 101 and a GUI and/or the like to inform the user of the amount that needed to be collected. The user could insert cash, and/or a credit or cash card into the CVM. The CVM could recognize the insertion via interaction between billing module 105 and cash recognition hardware 107 and/or card recognition hardware 109 in a manner analogous to that discussed above.

Where the user inserted a cash card, credit card, and/or the like as payment, billing module 105 might interact with a banking service in a manner analogous to that discussed above to have the amount charged to the appropriate account. Similarly, billing module 105 could act in a manner analogous to that discussed above to have the appropriate amount of cash inserted by the user. In various embodiments of the present invention, in the case where the CVM determined that dispatch of the content to the user was unsuccessful, refund could be performed in a manner analogous to that discussed above.

It is noted that, in various embodiments of the present invention, a user might receive content before paying for it. Such functionality might be archived by applying digital rights management (DRM) to dispatched content such that a user would only be able to make use of the content for a limited amount of time unless she paid for it. In such embodiments, upon paying for the content, dispatched to the user's terminal by the CVM could be a key or the like which would allow the user unlimited or extended access to the content.

It is further noted that, in various embodiments of the present invention, a user might execute payment using her terminal instead of an interface directly associated with a CVM. For such embodiments, the CVM might act in a manner analogous to that discussed above with respect to content selection to dispatch to the terminal one or more software modules or a hyperlink. A remote presentation module might interact with the one or more modules, or a terminal web browser directed to the address specified by the hyperlink, to have the terminal indicate to its user that a specified payment needed to be submitted. Such indication might, for instance, be performed by a GUI associated with the terminal.

In response, the user might enter appropriate billing information, such as a credit card number and related information, into her terminal for dispatch to the CVM. Such entry might, for instance, be done using a GUI or the like associated with the terminal. Dispatch could be performed in an encrypted and/or otherwise secure manner. In certain embodiments, instead of the user entering such information, it could be retrieved from a store associated with the terminal.

Upon receipt of the information, billing module 105 could interact with a banking service in a manner analogous to that discussed above. The CVM could then proceed in a manner analogous to that discussed above. It is noted that, in various embodiments, a user receiving an indication at her terminal that a specified payment needed to be submitted might respond by inserting cash or a card into the CVM in a manner analogous to that discussed above.

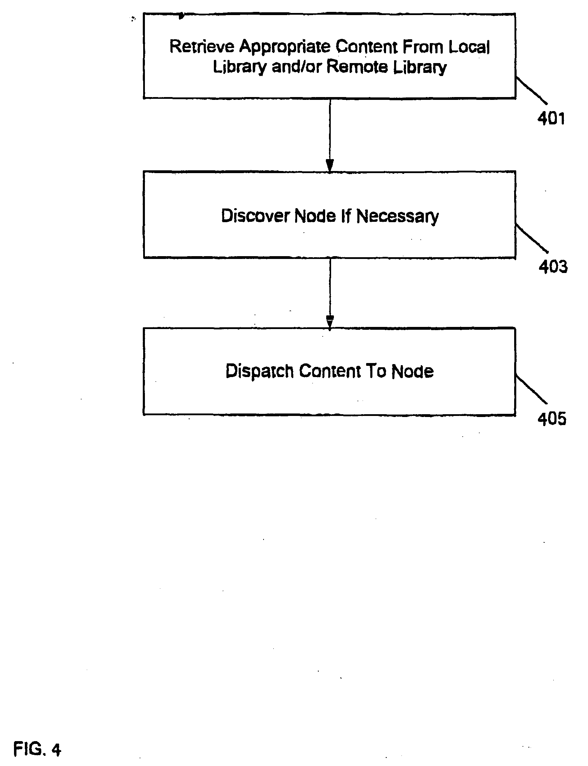

Various aspects of content delivery were discussed above. Further details will now be provided. More specifically, with reference to Fig. 4, it is noted that in content delivery CM 103 could act to retrieve the appropriate content item or items from local library 113 and/or remote library 115 (401) and dispatch it to the terminal (405). In embodiments where terminal discovery was necessary but the CVM had not already discovered the terminal, discovery could be achieved in a manner analogous to that discussed above (step 403).

More specifically, the CVM might act, perhaps using a GUI, voice interface, and/or the like, to present to the user a listing of the discovered nodes and to request that the user select her node from the list. The content item or items could then be dispatched to the selected node. Where the user, before inserting payment, used her node to indicate to the CVM that she was about to insert payment for the delivery of content to her node, dispatch could be to that node. The CVM could employ one or more node identifiers received with the indication in the dispatch. For example, the CVM might employ device discovery to find the node associated with a received identifier, and dispatch the content item or items to that node.

Dispatch could, for example, involve use of OBEX object push profile, OBEX file transfer profile, MMS, and/or the like. As alluded to above, content might, depending of the embodiment employed, be dispatched to a user's terminal by a CVM before or after receipt of payment. Accordingly, in the case where content was dispatched before payment, upon payment the appropriate key might be dispatched to the terminal in a manner analogous to that just discussed with reference to content dispatch.

It is noted that, in various embodiments, a user might be able to request that dispatch occur at a specified time, after a specified delay, and/or the like. It is further noted that, as alluded to above, in various embodiments a CVM may operate in a "batch dispatch mode" where multiple content items are dispatched at once.

### Non-Content Vending

As alluded to above, in certain embodiments of the present invention, a CVM might offer not only content vending functionality but also additional vending functionality.

Accordingly, a CVM might employ a local presentation module 101 and/or a remote presentation module 118 not only to inform a user of available content but also of available non-content items. Such non-content item might include, for example, food, drinks, and/or tickets vendible by the machine. Similarly, various modules may act to collect payment for non-content items in a manner analogous to that described above with reference to collecting payment for content items.

In certain embodiments, there may be certain correlations between vended content items and vended non-content items. For example, a content item might be offered free with purchase of a non-content item, or vice versa. As specific example, an offer may be extended wherein purchase of a ticket to see a concert given by a certain artist results in receiving a free content item relating to that artist (e.g., a music video). As additional specific examples, a content item might be offered for free with purchase of a drink, a food item might be offered for free with purchase of a content item, and/or a content item might be offered for free with an ATM cash withdrawal. In certain embodiments, a content item correlated to a non-content item might be DRM-protected so as to be time limited. Thus, in the example noted above, access to the free content item might expire after a certain period of time.

With reference to Fig. 1, it is noted that for various embodiments of the present invention, non-content vendmg by a CVM might involve non-content vending module 119 and/or non-content vending hardware 121. For instance, CM module 103 might communicate with non-content vending module 119. Non-content vending hardware 121 might include, for instance, drink vending equipment, ticket vending equipment, ATM equipment, and/or the like.

### Additional Aspects

For various embodiments of the present invention, security measures may be taken for the delivery of content items to nodes (e.g., wireless terminals) and/or for other communications between CVMs and nodes. For instance, where a CVM employs a wireless link for communications with nodes, the CVM might employ wireless transmission that is of low power and/or may employ a directional antenna. Such might act to prevent reception of transmissions by unintended panics by limiting reception of CVM transmissions to nodes placed in close proximity and/or directly in front of the CVM.

It is further noted that in various embodiments a wireless connection between CVM and node may be employed using, for instance, an infrared (e.g., IrDA) or similar connection. As reception of transmission in such cases could require being within range of the infrared or similar transmission, here too there might be decreased change of communications being intercepted by unintended parties.

It is further noted that encryption, authentication, and/or the like might be employed for the delivery of content items to terminals and/or for other communications between CVMs and nodes. For example, link level encryption might be employed, the encryption perhaps being 128-bit or higher. As another example a unique identifier such as, for instance, a media access control (MAC) address, Bluetooth address, phone number, and/or the like may be employed in authentication. In certain embodiments such a unique identifier might be stored in an radio-frequency identification (RFID) tag associated with a terminal, and a CVM might retrieve the identifier by reading the tag using appropriate software modules and/or hardware. It is further noted that, in various embodiments, techniques such as IEEE 802.11x and/or the like may be employed.

It is noted that, for various embodiments, in the case where a CVM is about to communicate with a user's node, various instructions might be presented to the user. For instance, where the dispatch was to employ Bluetooth, IEEE 802.11b, infrared, or the like, the user could be instructed to place her node in transmission range of the CVM. As another example, in embodiments where transmission was to be via wired connection, the user could be instructed to make the appropriate wired connection between her node and the CVM. Such instructions could, for example be presented to the user via a GUI, voice interface, or other interface associated with the CVM, perhaps via operation of local presentation module 101.

### Hardware and Software

Certain devices employed in accordance with the present invention may be implemented using computers. For example, the above-noted nodes may be implemented using network-capable computers. Accordingly, a user's node could be a wireless terminal. Similarly, computers could be employed in the implementation of CVMs. furthermore, certain procedures and the like described herein may be executed by or with the help of computers. The phrases "computer", "general purpose computer", and the like, as used herein, refer but are not limited to a processor card smart card, a media device, a personal computer, an engineering workstation, a PC, a Macintosh, a PDA, a wired or wireless terminal, a server, a network access point, a network multicast point, or the like, perhaps running an operating system such as OS X, Linux, Darwin, Windows CE, Windows XP, Palm OS, Symbian OS, or the like, perhaps with support for Java or .Net.

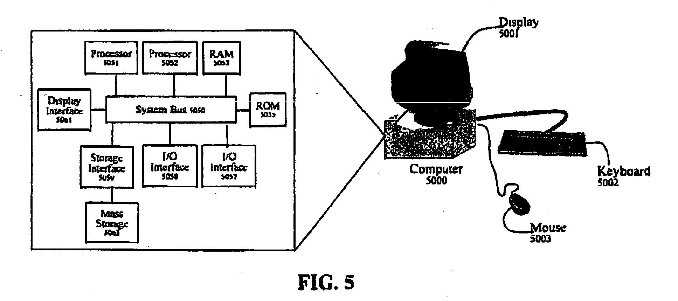

The phrases "general purpose computer", "computer", and the like also refer, but are not limited to, one or more processors operatively connected to one or more memory or storage units, wherein the memory or storage may contain data, algorithms, and/or program code, and the processor or processors may execute the program code and/or manipulate the program code, data, and/or algorithms. Accordingly, exemplary computer 5000 as shown in Fig. 5 includes system bus 5050 which operatively connects two processors 5051 and 5052, random access memory (RAM) 5053, read-only memory (ROM) 5055, input output (I/O) interfaces 5057 and 5058, storage interface 5059, and display interface 5061. Storage interface 5059 in turn connects to mass storage 5063. Each of I/O interfaces 5057 and 5058 may be an Ethernet, IEEE 1394. IEEE 802.11b, Bluetooth, terrestrial digital video broadcast (DVB-T), satellite digital video broadcast (DVB-S), digital audio broadcast (DAB), general packet radio service (GPRS), universal mobile telecommunications service (UMTS), or other interface known in the art.

Mass storage 5063 may be a hard drive, optical drive, or the like. Processors 5057 and 5058 may each be a commonly known processor such as an IBM or Motorola PowerPC, an AMD Athlon, an AMD Opteron, an Intel ARM, an Intel XScale, a Transmeta Crusoe, or an Intel Pentium. Computer 5000 as shown in this example also includes an display unit 5001, a keyboard 5002 and a mouse 5003. In alternate embodiments, keyboard 5002, and/or mouse 5003 might be replaced and/or augmented with a touch screen, pen, and/or keypad interface. Computer 5000 may additionally include or be attached to card readers, DVD drives, or floppy disk drives whereby media containing program code may be inserted for the purpose of loading the code onto the computer.

In accordance with the present invention, a computer may run one or more software modules designed to perform one or more of the above-described operations, the modules being programmed using languages such as Java, Objective C, C, C#, and/or C++ according to methods known in the art. It is noted that any described division of operations among particular software modules is for purposes of illustration, and that alternate divisions of operation may be employed. Accordingly, operations discussed as being performed by one software module might instead be performed by a plurality of software modules. Similarly, operations discussed as being performed by a plurality of modules might instead be performed by a single module.

Further, although embodiments of the invention disclose certain software modules as operating on certain devices, in alternate embodiments these modules might be distributed to run on other devices than those stated. For example, operations disclosed as being performed by a particular CVM might instead be performed by a plurality of CVMs and/or other devices. It is further noted that, in various embodiments, grid computing techniques may be employed.

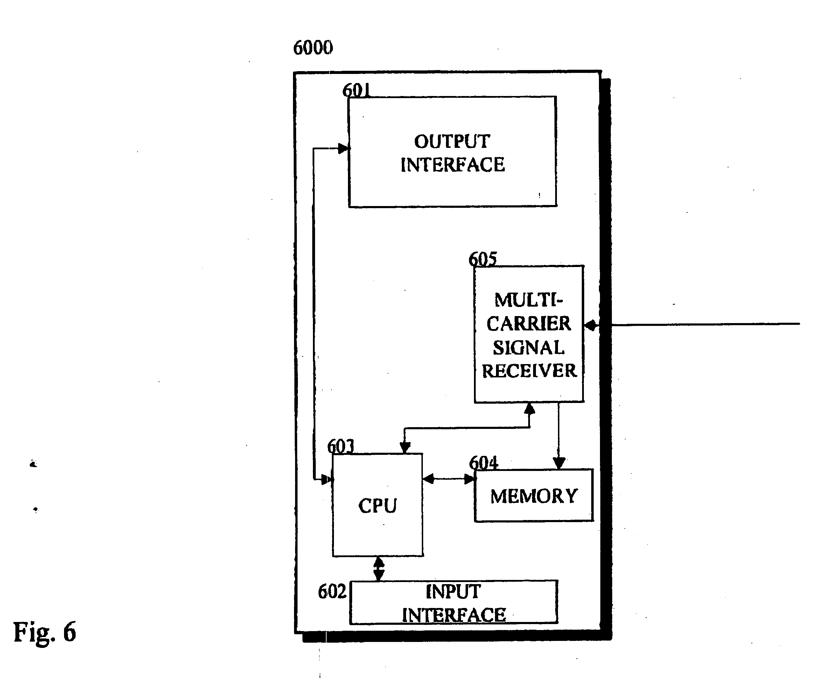

Shown in Fig. 6 is a functional block diagram of an exemplary terminal employable in various embodiments of the present invention. The terminal of Fig. 6 has been discussed in the foregoing. In the following, corresponding reference signs have been applied to corresponding parts. Terminal 6000 of Fig. 6 may be used in any/all of the embodiments described herein. The terminal 6000 comprises a processing unit CPU 603, a multi-carrier signal terminal part 605 and a user interface (601, 602). The multi-carrier signal terminal part 605 and the user interface (601, 602) are coupled with the processing unit CPU 603. One or more direct memory access (DMA) channels may exist between multi-carrier signal terminal part 605 and memory 604. The user interface (601,602) comprises a display and a keyboard to enable a user to use the terminal 6000. In addition, the user interface (601, 602) comprises a microphone and a speaker for receiving and producing audio signals. The user interface (601, 602) may also comprise voice recognition (not shown).

The processing unit CPU 603 comprises a microprocessor (not shown), memory 604 and possibly software. The software can be stored in the memory 604. The microprocessor controls, on the basis of the software, the operation of the terminal 6000, such as the receiving of the data stream, the tolerance of the impulse burst noise in the data reception, displaying output in the user interface and the reading of inputs received from the user interface. The operations are described above. The hardware contains circuitry for detecting the signal, circuitry for demodulation, circuitry for detecting the impulse, circuitry for blanking those samples of the symbol where significant amount of impulse noise is present, circuitry for calculating estimates, and circuitry for performing the corrections of the corrupted data.

Still referring to Figure 6, alternatively, middleware or software implementation can be applied. The terminal 6000 can be a hand-held device which the user can comfortably carry. Advantageously, the terminal 6000 can be a cellular mobile phone which comprises the multi-carrier signal terminal part 605 for receiving the multicast transmission stream. Therefore, the terminal 6000 may possibly interact with the service providers.

### Ramifications and Scope

Although the description above contains many specifics, these are merely provided to illustrate the invention and should not be construed as limitations of the invention's scope. Thus it will be apparent to those skilled in the art that various modifications and variations can be made in the system and processes of the present invention without departing from the spirit or scope of the invention.

## Claims

1. A method for content distribution, comprising:
receiving at a vending machine a request for a content item;
receiving at said vending machine payment for said content item, wherein said payment is provided via cash inserted into said vending machine by a user requesting the content item;
discovering a node associated with the user requesting the content;
establishing a wireless short-range data link with said node; and
dispatching said content item to said node over the wireless short-range data link.

2. The method of claim 1, further comprising receiving at said vending machine a node identifier.

3. The method of claim 2, wherein discovering takes into account said identifier.

4. The method of claim 2, wherein said identifier is received prior to receiving said payment.

5. The method of claim 1, further comprising:
providing to said user a list of discovered nodes, said list including said node; and
receiving at said vending machine an indication of said user's selection of said node from said list.

6. The method of claim 1, wherein said content item is audio, video, or a ring tone.

7. The method of claim 1, wherein said content item is software.

8. The method of claim 7, wherein said software includes at least one Java application.

9. The method for claim 1, wherein said request is entered using an interface integrated with said vending machine.

10. The method of claim 1, wherein said request is entered using said node.

11. The method of claim 1, wherein providing said payment further includes providing the payment partly via a banking or credit card inserted into said vending machine.

12. The method of claim 1, wherein content available for dispatch is stored within said vending machine.

13. The method of claim 1, wherein content available for dispatch is stored remote from said vending machine.

14. The method of claim 1, wherein said vending machine advises said user of content available for dispatch and prices associated with said content available for dispatch.

15. The method of claim 1, wherein encryption is employed in dispatching said content item.

16. The method of claim 1, wherein authentication is employed in dispatching said content item.

17. The method of claim 16, wherein a radio frequency identification tag is employed in said authentication.

18. The method of claim 1, further comprising:
receiving at said vending machine an indication that cash is going to be inserted into said vending machine as payment in exchange for delivery of content to a specified node.

19. A system for content distribution, comprising:
a memory having program code stored therein; and
a processor operatively connected to said memory for carrying out instructions in accordance with said stored program code;
wherein said program code, when executed by said processor, causes said processor to perform the steps of:
receiving at a vending machine a request for a content item;
receiving at said vending machine payment for said content item, wherein said payment is provided via cash inserted into said vending machine by a user requesting the content item;
discovering a node associated with the user requesting the content;
establishing a wireless short-range data link with said node; and
dispatching said content item to said node over the wireless short-range data link.

20. The system of claim 19, wherein said processor further performs the step of receiving at said vending machine a node identifier.

21. The system of claim 20, wherein discovering takes into account said identifier.

22. The system of claim 20, wherein said identifier is received prior to receiving said payment.

23. The system of claim 19, wherein said processor further performs the steps of:
providing to said user a list of discovered nodes, said list including said node; and
receiving at said vending machine an indication of said user's selection of said node from said list.

24. The system of claim 19, wherein said content item is audio, video, or a ring tone.

25. The system of claim 19, wherein said content item is software.

26. The system of claim 25, wherein said software includes at least one Java application.

27. The system for claim 19, wherein said request is entered using an interface integrated with said vending machine.

28. The system of claim 19, wherein said request is entered using said node.

29. The system of claim 19, wherein providing said payment further includes providing the payment partly via a banking or credit card inserted into said vending machine.

30. The system of claim 19, wherein content available for dispatch is stored within said vending machine.

31. The system of claim 19, wherein content available for dispatch is stored remote from said vending machine.

32. The system of claim 19, wherein said processor further performs the step of:
advising said user of content available for dispatch and prices associated with said content available for dispatch.

33. The system of claim 19, wherein said processor further performs the step of:
receiving at said vending machine an indication that cash is going to be inserted into said vending machine as payment in exchange for delivery of content to a specified node.

34. The system of claim 19, wherein encryption is employed in dispatching said content item.

35. The system of claim 19, wherein authentication is employed in dispatching said content item.

36. The system of claim 35, wherein a radio frequency identification tag is employed in said authentication.
